# FASCICULE DE BREVET EUROPEEN

(11) **EP 2 144 113 B1**
(45) Date de publication et mention de la délivrance du brevet: **18.03.2015**
(21) Numéro de dépôt: 09164893.1
(22) Date de dépôt: 08.07.2009
(51) Int. Cl.: G02F 1/35, G02F 1/355

(54) **Dispositif optique comportant un cristal photonique a base de GaInP sans absorption à deux photons**
Optische Vorrichtung, die einen photonischen Kristall auf GaInP-Basis ohne Zwei-Photonen-Absorption umfasst
Optical device comprising a photonic crystal based on GaInP without two-photon absorption

(30) Priorité: 11.07.2008 FR 0803991
(43) Date de publication de la demande: 13.01.2010
(73) Titulaire: THALES, 92200 Neuilly-sur-Seine (FR)
(72) Inventeur: Combrie, Sylvain, 75014, PARIS (FR); De Rossi, Alfredo, 75014, PARIS (FR)
(74) Mandataire: Esselin, Sophie

(56) Documents cités:
- US-A1- 2004 062 505
- COMBRIE S ET AL: "Detailed analysis by Fabry-Perot method of slab photonic crystal line-defect waveguides and cavities in aluminium-free material system" OPTICS EXPRESS 2006 OPTICAL SOCIETY OF AMERICA US, vol. 14, no. 16, 2006, pages 7353-7361, XP002512620
- ODA HISAYA ET AL: "Self-phase modulation in photonic-crystal-slab line-defect waveguides" APPLIED PHYSICS LETTERS, AIP, AMERICAN INSTITUTE OF PHYSICS, MELVILLE, NY, vol. 90, no. 23, 4 juin 2007 (2007-06-04), pages 231102-231102, XP012095111 ISSN: 0003-6951
- NOTOMI M ET AL: "Waveguides, resonators and their coupled elements in photonic crystal slabs" OPTICS EXPRESS APRIL 2004 OPTICAL SOCIETY OF AMERICA US, vol. 12, no. 8, avril 2004 (2004-04), pages 1551-1561, XP002512621
- PANOIU N C ET AL: "All-optical tunability of a nonlinear photonic crystal channel drop filter" OPTICS EXPRESS APRIL 2004 OPTICAL SOCIETY OF AMERICA US, vol. 12, no. 8, avril 2004 (2004-04), pages 1605-1610, XP002512622
- CHEN A ET AL: "Two-dimensional AlGaInP/GaInP photonic crystal membrane lasers operating in the visible regime at room temperature" APPLIED PHYSICS LETTERS, AIP, AMERICAN INSTITUTE OF PHYSICS, MELVILLE, NY, vol. 90, no. 1, 4 janvier 2007 (2007-01-04), pages 11113-011113, XP012093307 ISSN: 0003-6951

## Description

Le domaine de l'invention est celui des dispositifs optiques à base de circuits à cristaux photoniques connus pour apporter des fonctions originales dans le domaine de la photonique, en particulier le traitement tout-optique du signal et notamment de l'échantillonnage du signal. La spécificité de cette technologie est la compacité extrême des structures réalisées.

A ce jour, l'intégration des composants photoniques reste un objectif très ambitieux. En contraste avec l'électronique, qui a connu la transition du composant discret au circuit intégré il y a bien longtemps, la photonique commence à emprunter la route vers l'intégration.

Il existe ainsi à l'heure actuelle le projet "*silicon photonics*" visant à transférer sur un substrat silicium des fonctions optiques passives (guides optiques, filtres, ..) et actives (lasers).

Plus généralement, les progrès récents dans la micro-fabrication (fabrication par e-beam, nouvelles techniques de gravure, ...) ont donné naissance à une variété de composants optiques miniaturisés dont les propriétés sont remarquables (micro modulateurs, micro capteurs, nanolasers, etc...) ouvrant la voie à une prochaine phase dans laquelle ces composants seront intégrés pour réaliser une fonction optique complexe.

L'intérêt de l'intégration n'est pas tellement dans d'amélioration des performances d'un composant (par exemple un modulateur ou un laser) mais plutôt dans la perspective de réduire l'encombrement, le poids, la consommation et la complexité de la phase d'assemblage des composants discrets lorsque l'on veut réaliser une fonction optique complexe.

Des exemples de fonction optique complexe peuvent typiquement être le routage tout-optique de paquets d'information ou une opération d'échantillonnage.

Il est ainsi possible d'organiser le routage d'informations par commande optique sur une porteuse optique. A partir d'une porteuse émettant un signal à la longueur d'onde λs, il est possible de faire interagir ladite onde signal avec une onde optique de commande à la longueur d'onde λ c pour adresser un paquet d'informations de signaux optiques correspondant au bit 3 ou au bit 2 ou au bit 1 ou au bit 0, encore dénommés « optical header recognition ».

Ce type d'application repose sur une fonction clé: une "porte" optique ultra-rapide qui s'ouvre à un instant bien précis pour permettre la capture de l'en tête des paquetages. Puisque les débits en question sont actuellement de l'ordre de 10 - 160 Gb/s, ces "portes" doivent commuter en moins de 10 picosecondes, voire 1 picoseconde. Ces vitesses sont accessibles en exploitant la réponse optique non-linéaire.

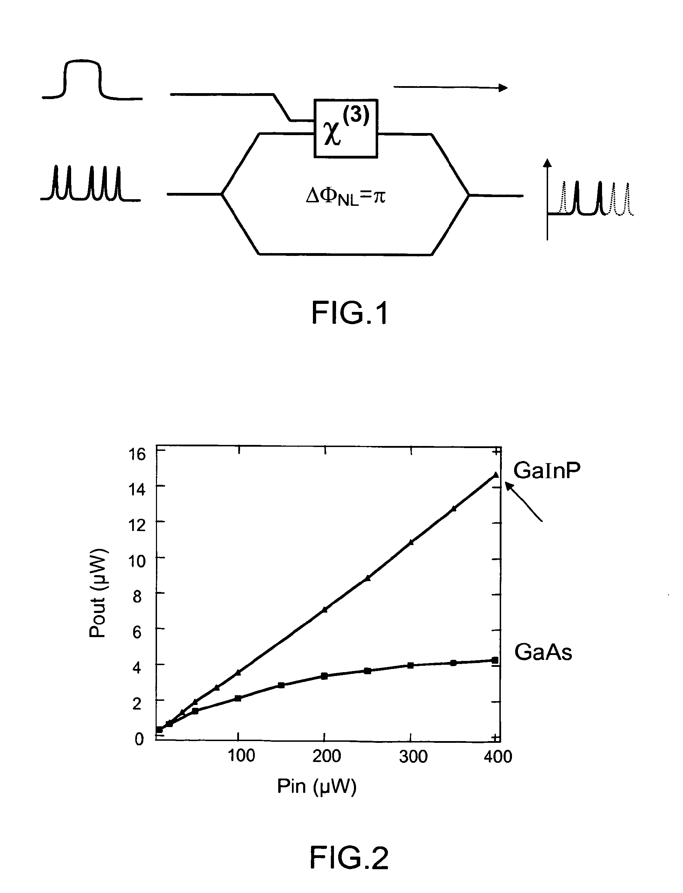

Pour assurer ce type de fonction, il est nécessaire d'utiliser un matériau dans lequel la propagation des signaux optiques peut générer des effets non-linéaires notamment en terme d'indice de réfraction. On peut notamment exploiter l'effet Kerr dans des matériaux présentant des effets non-linéaires du troisième ordre. Dans ce type de matériaux la phase d'une onde optique varie en fonction de la puissance. Pour exploiter une variation d'intensité et non de phase, il est connu d'utiliser un interféromètre tel que celui illustré en figure 1.

Ainsi, l'interaction d'une porteuse optique avec un signal de commande au sein d'un matériau à fort coefficient non-linéaire X⁽³⁾ permet d'échantillonner la porteuse optique.

Pour obtenir des résultats performants, il est néanmoins nécessaire qu'au sein du matériau à effet non linéaire, les phénomènes d'absorption restent négligeables et notamment les phénomènes d'absorption à deux photons reconnus dans les matériaux présentant des propriétés intéressantes en optique non linéaire.

La problématique dans laquelle s'inscrit ainsi la présente invention est d'avoir une réponse non linéaire de type Kerr (indice de réfraction variant avec la puissance optique) sans que cela soit accompagné d'une absorption à 2 photons, suivi par une génération de porteurs et source de problème.

A ce titre, des matériaux tels que le silicium ne conviennent pas pour des applications de commutation ultra rapide (domaine des quelques picosecondes).

Une solution présentée en littérature consiste à utiliser des semiconducteurs à bande directe (par exemple le GaAs et ses dérivés ternaires à base d'alumium), le but étant de fixer l'énergie de la bande interdite à un valeur supérieure à deux fois l'énergie des photons impliqués dans le processus non-linéaire.

Par exemple, pour des applications de télécommunications, cette énergie est 2x0.8eV = 1.6eV. Il existe une vaste littérature dans laquelle on démontre que le matériau de choix est le AlGaAs avec une fraction molaire d'Aluminium d'au moins 18%. Ce matériau présente un forte réponse de type Kerr et une absorption à 2 photons faible.

Il est par ailleurs nécessaire de renforcer la réponse non linéaire par le confinement de la puissance optique en introduisant des résonances.

La technologie des cristaux photoniques est bien adaptée à la commutation non linéaire, car elle permet un confinement de la lumière sans précédents par rapport à d'autres structures optiques. Récemment, un groupe japonais (H. Oda et al., APPLIED PHYSICS LETTERS 90, 231102 (2007)) a réussi à fabriquer des structures à cristaux photoniques en AlGaAs et montre l'effet Kerr.

Cela représente un intérêt majeur, car les cristaux photoniques permettent d'exalter la non-linearité, abaissant la puissance optique requise et la ramener à des valeurs compatibles avec les signaux optiques pour des applications en télécommunications.

Néanmoins cette solution présente un défaut majeur. En effet l'alliage à base de Al, Ga, As est un matériau qui n'est pas stable lorsqu'il est exposé à l'oxygène, ce phénomène étant amplifié par la nanostructuration du matériau. Cela devient d'autant plus grave que la fraction d'aluminum augmente et engendre ainsi une faible tenue au flux optique du fait des défauts surfaciques générés par l'oxydation.

Il est à noter que l'article : Combrie S et al. « Detailed analysis by Fabry-Perot method of slab photoniq crystal line-defect waveguides ans cavities in aluminium-free material systemn » Optics Express, Optical Society of Americ US,vol.14, no.16, 2006, pages 7353-7361, XP002512620, décrit l'utilisation de cristaux photoniques à base de GaAs Le préambule de la revendication 1 est basé sur cet article.

Dans ce contexte, la présente invention propose d'utiliser un nouveau type de matériau semiconducteur dans lequel il est possible de réaliser des structures de cristal photonique, présentant d'excellentes propriétés en terme de non-linéarité du troisième ordre et ne présentant pas de phénomène d'absorption à deux photons dans la bande de longueurs d'onde de fonctionnement du dispositif optique l'intégrant.

Plus précisément la présente invention a pour objet un dispositif optique fonctionnant comme porte optique dans une gamme de longueur d'onde centrée sur une longueur d'onde de référence (λ₀) et fournissant un signal optique de sortie à partir de l'injection d'un premier signal optique, le dispositif optique comprennant une structure à cristal photonique comportant un substrat semiconducteur et au moins une couche de matériau semiconducteur présentant au moins localement un ensemble de motifs périodiques correspondant à ladite structure de cristal photonique disposés de manière à former une cavité optique résonante à une longueur d'onde dans la gamme de longueurs d'onde de fonctionnement dudit dispositif, ledit matériau de la couche semiconductrice étant un alliage de Gallium, d'Indium et de Phosphore ne présentant pas d'absorption à deux photons pour des photons ayant une longueur d'onde dans la gamme de longueurs d'onde de fonctionnement dudit dispositif.

Selon une variante de l'invention, le dispositif comporte un ensemble de cavités optiques, permettant de renforcer le signal optique de sortie.

Selon une variante de l'invention, le dispositif comprend dans ladite couche semiconductrice un premier guide et au moins une cavité optique couplée audit premier guide, au moins un premier signal optique comportant un ensemble de fréquences porteuses et étant introduit au niveau dudit premier guide, couplé à la cavité, ladite cavité assurant une fonction de filtre et ayant une fréquence de résonance telle que ladite fréquence permet d'extraire de ladite cavité un signal optique à ladite fréquence.

Selon une variante de l'invention, un premier signal optique porteur d'informations est introduit dans ledit guide selon une première direction de propagation, un second signal optique de commande comportant un train d'implusions et étant introduit dans ledit guide selon une seconde direction de propagation opposée à ladite première direction de manière à pouvoir sélectionner des informations contenues dans ledit premier signal optique.

Selon une variante de l'invention, le dispositif comprend un second guide couplé à la cavité optique, un premier signal optique porteur d'informations comportant un ensemble de fréquences porteuses et étant introduit dans ledit premier guide, un second signal optique de commande comportant un train d'impulsions et étant introduit dans le second guide de manière à pouvoir sélectionner des informations contenues dans ledit premier signal optique.

Selon une variante de l'invention, le dispositif comprend un photodétecteur couplé audit second guide à l'extrémité opposée à celle par laquelle est introduit le signal de commande, pour récupérer le signal optique de sortie.

Selon une variante de l'invention, les premier et second guides comportent des filtres à cristaux photoniques et permettent de bloquer le signal de commande ;

Selon une variante de l'invention, le dispositif comprend une série de cavités ou d'ensemble de cavités et une série de seconds guides permettant d'adresser une série de signaux de commande.

Selon une variante de l'invention, le dispositif comprend une série de photodétecteurs permettant de récupérer une série de signaux de sortie à partir de l'injection d'un signal optique d'entrée.

Selon une variante de l'invention, le dispositif comporte un ensemble de cavités optiques, permettant de renforcer l'interaction du signal optique de sortie.

Selon une variante de l'invention, le dispositif comprend à la surface d'un substrat en GaAs, l'empilement de couches suivantes :
- une couche de GaInP ;
- une couche sacrificielle de GaAs ;
- la couche de matériau semiconducteur en alliage GaInP comportant la structure périodique.

Selon une variante de l'invention, la couche sacrificielle est localement dégagée sous la couche de matériau semiconducteur comportant la structure périodique.

Selon une variante de l'invention, la couche de matériau semiconducteur comporte localement une absence de motifs périodiques de manière à créer un ou des guides d'onde, une ou des cavités.

Selon une variante de l'invention les motifs périodiques sont des trous.

L'invention sera mieux comprise et d'autres avantages apparaîtront à la lecture de la description qui va suivre donnée à titre non limitatif et grâce aux figures annexées parmi lesquelles :
- la figure 1 schématise un interféromètre permettant d'organiser le routage d'informations par commande optique sur une porteuse optique ;
- la figure 2 illustre la transmission d'un signal optique d'impulsion 10 picosecondes dans un guide d'onde réalisé dans un cristal photonique à base de GaAs et dans un cristal photonique à base de GaInP ;
- la figure 3 illutre l'évolution de la transmission au sein d'un guide d'onde de cristal photonique réalisé à partir de GaInP en fonction de la longueur d'onde de propagation d'une onde optique et ce pour différentes puissances ;
- les figures 4a et 4b illustrent une vue de dessus et une vue en coupe d'une exemple de structure à cristal photonique utilisée dans un dispositif de l'invention ;
- les figures 5a et 5b illustrent différentes vues d'un dispositif optique de l'invention comportant au moins un guide d'onde couplé à une cavité réalisée dans une structure membranaire de cristal photonique ;
- la figure 6 illustre une configuration à deux guides et une cavité utilisés dans un dispositif optique de l'invention ;
- la figure 7 illustre un exemple d'architecture qui combine plusieurs éléments fonctionnels pour réaliser la fonction de réconnaissance d'en-tête de paquetages optiques.

La présente invention propose un dispositif optique intégrant une structure à cristal photonique élaboré dans un nouveau type de matériau semiconducteur, en l'occurrence un alliage de GaInP (en accord de maille sur GaAs) et de préférence répondant à la formule chimique suivante : Ga _{0,51}In _{0,49}P.

Il a été démontré par la demanderesse que ce matériau présente les mêmes propriétés non-linéaires que le AlGaAs à fort teneur de Al, tout en étant parfaitement stable et résistant aux forts flux optiques.

II s'agit d'un avantage décisif permettant d'obtenir à partir d'une puissance optique au demeurant modeste, des intensités optiques très grandes conformément aux cristaux photoniques tout en ne présentant pas d'absorption néfaste à deux photons pour les applications ciblées.

Tout d'abord, le « band-gap » soit le gap d'énergie entre la bande de valence et la bande de conduction du GaInP (précisément Ga_{0.51}In_{0.49}P), semiconducteur à bande directe, est d'environ 1.9 eV, soit une absorption à deux photons négligeable, voir nulle, pour des signaux optiques dans la bande Telecom (énérgie 0.8eV < 1.9eV/2).

Ceci est notamment illustré par la figure 2 qui montre l'évolution de la transmission d'une structure de cristal photonique avec un matériau semiconducteur de type GaAs et un matériau semiconducteur de type GaInP selon l'invention. La transmission est plus précisément illustrée par la puissance en sortie Pout à partir d'une puissance d'entrée Pin d'un guide réalisé dans la structure, cette puissance étant exprimée en micro watts.

L'absorption à deux photons se traduit dans le cas du GaAs par un effet de seuil de la puissance de sortie alors que le GaInP ne présente pas de problème d'aborption se traduisant par un effet de saturation.

La demanderesse a par ailleurs montré expérimentalement des propriétés obtenues à partir de guide d'ondes à cristaux photoniques réalisé au sein d'une structure à cristal photonique sur GaInP.

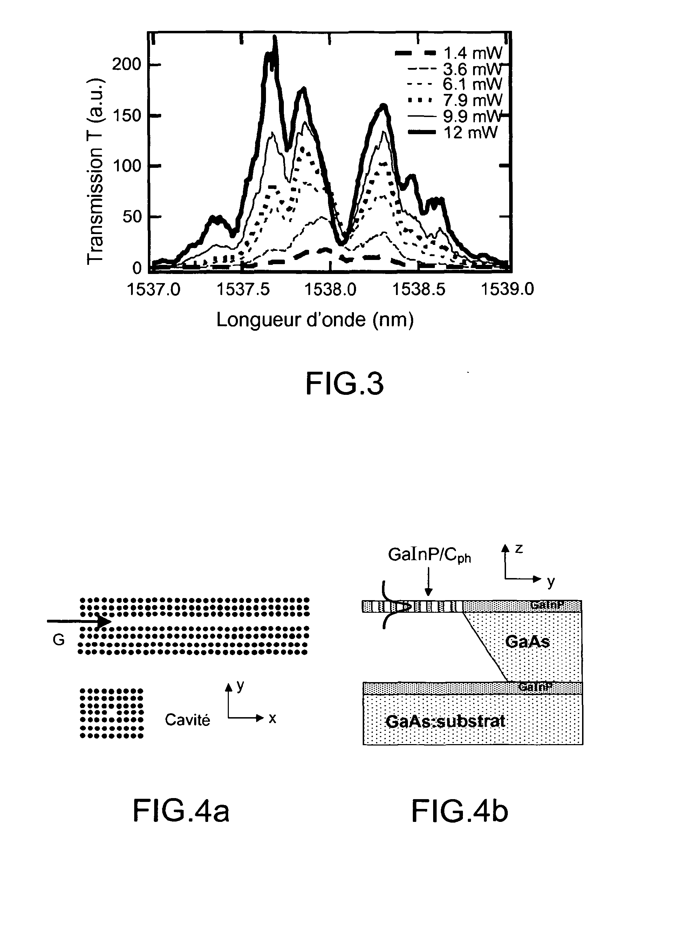

La figure 3 illustre à ce titre, le spectre de l'impulsion transmise, qui montre un fort élargissement spectral, prouvant une auto-modulation de phase et un creux au centre du diagramme associé à un changement de phase non-linéaire de l'ordre de π attestant des propriétés non-linéaires du matériau., comme décrit dans l'article : H. Oda et al., APPLIED PHYSICS LETTERS 90, 231102 (2007).

Nous allons décrire ci-après des exemples de dispositifs optiques selon l'invention, comportant une structure membranaire dans laquelle sont réalisés des cristaux photoniques comportant une ou des micro-cavités et un ou des guides d'onde et notamment des exemples de dispositifs optiques permettant de réaliser des fonctions de commutation optique.

De manière générale, les cristaux photoniques sont des structures dont l'indice diélectrique varie de manière périodique à l'échelle de la longueur d'onde, sur une ou plusieurs directions de l'espace. Par rapport aux structures cristallines en trois dimensions, il a été montré qu'une structure en deux dimensions pouvait être particulièrement intéressante. On réalise dans ce cas des cristaux dans une fine couche guidante semiconductrice ce qui permet un meilleur contrôle et une technologie plus aisée de réalisation compatible des technologies classiques de microélectronique. On isole une couche très fine constituant ainsi une membrane pouvant typiquement présenter une épaisseur h de l'ordre de 150 nanomètres à 300 nanomètres pour les applications visant le domaine spectral entre environ 1 micron et 1.6 microns. Par une simple loi d'echelle, cette épaisseur est ajustée pour étendre l'application à d'autres domaines spectrales, typiquement cette épaisseur peut être comprise entre 0.1 et 0.3 fois la longueur d'onde.

En créant une rupture au niveau d'une telle structure périodique par exemple par omission de certains trous, il devient possible de créer une cavité photonique au sein de laquelle l'énergie reste stockée. Une telle cavité peut alors assurer une fonction de filtre avec des modes en résonance ou bien constituer une cavité laser émettant dans un plan perpendiculaire au plan de la membrane.

La figure 4a illustre une vue de dessus d'un guide G et d'une cavité Ca réalisée par absence de motifs au sein d'une structure de cristal photonique Cph élaborée dans une fine couche de GaInP.

La figure 4b illustre une vue en coupe de cette fine couche dans laquelle on est amené à réaliser les différentes fonctions souhaitées : cavité résonnante, guide, filtres,....

Pour cela, on réalise un empilement de couches suivantes à la surface d'un substrat de GaAs :
- une couche d'arrêt en GaInP ;
- une couche sacrificielle en GaAs ;
- la couche en GaInP.

Il est à noter que la couche d'arrêt est optionnelle.

L' ensemble des fonctions peut être élaboré par gravure locale de la couche de GaInP. La membrane est dégagée par gravure humide de la couche sacrificielle en GaAs avec arrêt de la gravure sur la couche en GaInP inférieure.

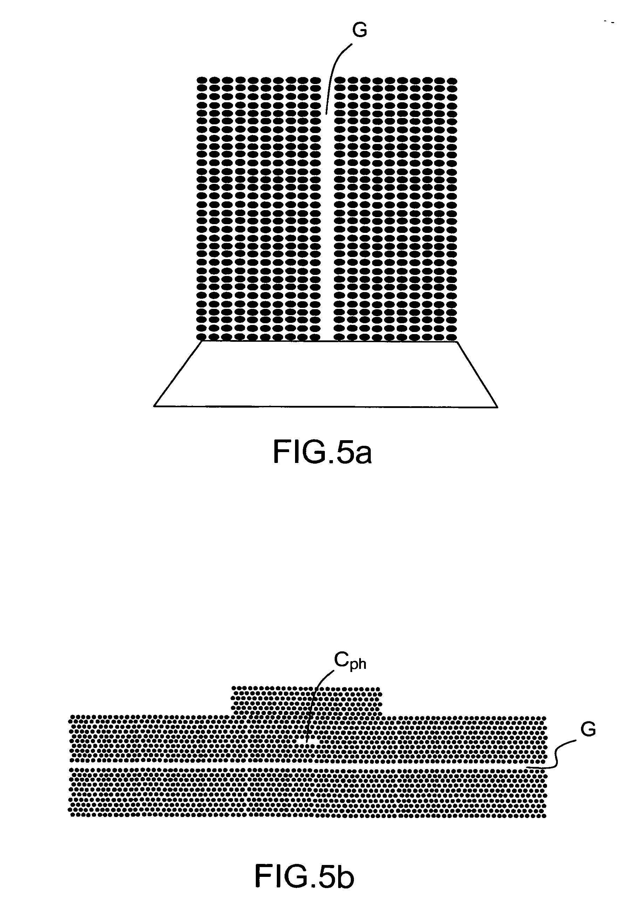

Les figures 5a et 5b illustrent des photographies de structure à cristal photonique utilisée dans un dispositif optique de l'invention et comportant notamment au moins un guide G et une cavité Cph, couplés entre eux.

Dans ce type de dipositif, un signal d'onde porteur est introduit au niveau d'une extrémité du guide. La cavité étant couplée au guide et donc alimentée par le signal d'onde porteur permet de filtrer seules les fréquences correspondant aux fréquences de résonance de la cavité. Suite à une impulsion de commande optique, cette fréquence se déplace et la porte s'ouvre ou se ferme selon la fréquence de la porteuse optique du signal par rapport à celle de la cavité.

Une variante de cette structure est une configuration de type « en ligne », telle que la structure transmet à la résonance.

Une autre variante consiste en l'utilisation de plusieurs cavités pour renforcer le rapport du signal entre les états "ouvert" et "fermé" (« extinction factor »). La fréquence de la cavité optique peut être différente de celle du signal, afin d'éviter la diaphonie. Dans ce cas, la cavité est dessinée de manière à avoir deux fréquences de résonance.

Un des intértêts majeurs de la présente invention est de pouvoir intégrer l'ensemble des fonctions nécessaires au fonctionnement du dispositif au sein de la couche de GaInP.

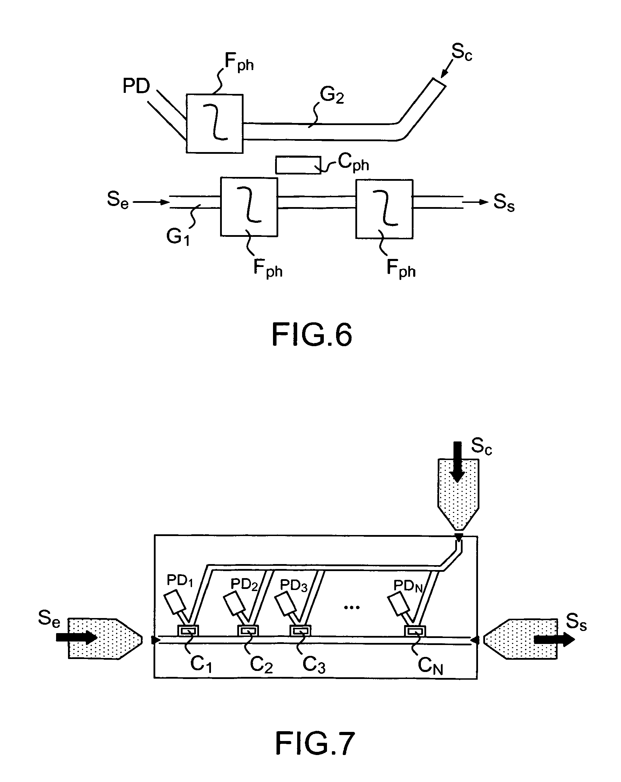

La figure 6 illustre à ce titre une variante comportant deux guides réalisés par rupture de périodicité. Un premier signal d'entrée Se est introduit dans un premier guide G₁ et est couplé avec la cavité Cph (alternativement, il pourrait être couplé avec un ensemble de cavités).

Un signal de commande S_{C} est en parallèle introduit au niveau d'un second guide d'onde G₂, ce second guide d'onde sert également à récupérer le signal en sortie de couplage avec la cavité photonique, par un photodétecteur PD.

Avantageusement des fonctions de filtre à cristaux photoniques Fph sont des filtres passe-bande, destinés à bloquer le signal de commande et peuvent également être dessinées au niveau de la rupture de périodicité pour éviter des retours de signaux non désirés susceptibles d'interférer avec les signaux utiles.

La figure 7 illustre une autre variante de dispositif optique de l'invention, comportant une série de cavités photoniques, une série de photodétecteurs, une série de seconds guides, ces différents composants étant couplés avec un signal optique porteur de paquets d'information qu'il convient de sélectionner avec différents signaux de commande introduits au niveau de la série de seconds guides.

Il s'agit d'un circuit à cristal photonique complexe avec des entrées-sorties basées sur la présente invention. A partir d'une porteuse ou signal d'entrée émettant un signal à la longueur d'onde λs, il est possible de faire interférer ladite onde signal avec une onde optique de commande à la longueur d'onde λc pour adresser un paquet d'informations de signaux optiques.

Ainsi, des portes optiques C₁, C₂,..., CN à base de cristaux photoniques permettent de coupler des signaux d'entrée Se et de commande Sc à des guides agencés de manière à réaliser une architecture d'interféromètre avec un signal optique de sortie Ss. Les guides sont réalisés au sein de cristaux photoniques de type membrane, par modification de la structure périodique, typiquement réalisée par absence de motifs. Le dispositif comporte également des photodétecteurs PD1, PD2, ..., PDN.

Une série de photodétecteurs est couplée à la série de seconds guides, les seconds guides étant coudés comme représentés en figure 6.

Typiquement, l'ensemble de l'encombrement d'un tel dispositif peut être extrêment compact, la longueur du dispositif illustré en figure 7 pouvant être de l'ordre de quelques millimètres.

Une alternative à cette variante est un dispositif dont la série de cavites comporte une ensemble de cavités et non plus une cavité unique.

## Revendications

1. Dispositif optique fonctionnant comme porte optique dans une gamme de longueur d'onde centrée sur une longueur d'onde de référence λ₀ et fournissant un signal optique de sortie à partir de l'injection d'un premier signal optique , le dispositif optique comprennant une structure à cristal photonique comportant un substrat semiconducteur et au moins une couche de matériau semiconducteur présentant au moins localement un ensemble de motifs périodiques correspondant à ladite structure de cristal photonique disposés de manière à former une cavité optique résonante à une longueur d'onde dans la gamme de longueurs d'onde de fonctionnement dudit dispositif, ledit dispositif étant **caractérisé en ce que** ledit matériau de la couche semiconductrice étant un alliage de Gallium, d'Indium et de Phosphore ne présentant pas d'absorption à deux photons pour des photons ayant une longueur d'onde dans la gamme de longueurs d'onde de fonctionnement dudit dispositif.

2. Dispositif optique selon la revendication 1, **caractérisé en ce qu'**il comporte un ensemble de cavités optiques, permettant de renforcer le signal optique de sortie et d'élargir la bande passante.

3. Dispositif optique selon l'une des revendications 1 ou 2, **caractérisé en ce qu'**il comprend dans ladite couche semiconductrice un premier guide, ladite cavité optique couplée audit premier guide, de sorte que ledit premier signal optique comportant un ensemble de fréquences porteuses puisse être introduit au niveau dudit premier guide, couplé à la cavité et ayant une fréquence de résonance telle que ladite fréquence permet d'extraire de ladite cavité un signal optique à ladite fréquence.

4. Utilisation d'un dispositif optique selon la revendication 1 adressé par deux signaux optiques, **caractérisé en ce que** ledit premier signal optique porteur d'informations est introduit dans ledit guide selon une première direction de propagation, un second signal optique de commande comportant un train d'impulsions et étant introduit dans ledit guide selon une seconde direction de propagation opposée à ladite première direction de manière à pouvoir sélectionner des informations contenues dans ledit premier signal optique.

5. Dispositif optique selon la revendication 1, **caractérisé en ce qu'**il comprend un second guide couplé à la cavité optique, de sorte que ledit premier signal optique porteur d'informations optique comportant un ensemble de fréquences porteuses puisse être introduit dans ledit premier guide, et qu'un second signal optique de commande comportant un train d'impulsions puisse être introduit dans le second guide de manière à pouvoir sélectionner des informations contenues dans ledit premier signal optique.

6. Dispositif optique selon la revendication 5, **caractérisé en ce qu'**il comprend un photodétecteur couplé audit second guide à l'extrémité opposée à celle par laquelle est introduit le signal de commande, pour récupérer le signal optique de sortie.

7. Dispositif optique selon l'une des revendications 5 ou 6, **caractérisé en ce que** les premier et second guides comportent des filtres à cristaux photoniques, passe-bande.

8. Dispositif optique selon l'une des revendications 5 ou 6, **caractérisé en ce qu'**il comprend une série de cavités ou d'ensemble de cavités et une série de seconds guides permettant d'adresser une série de signaux de commande.

9. Dispositif optique selon la revendication 8, **caractérisé en ce qu'**il comprend une série de photodétecteurs permettant de récupérer une série de signaux de sortie à partir d'un signal optique d'entrée.

10. Dispositif optique selon l'une des revendications 1 à 3 et 5 à 9, **caractérisé en ce qu'**il comporte un ensemble de cavités optiques, permettant de renforcer l'interaction du signal optique de sortie.

11. Dispositif optique selon l'une des revendications 1 à 3 et 5 à 10, **caractérisé en ce qu'**il comprend à la surface d'un substrat en GaAs, l'empilement de couches suivantes :
- une couche de GaInP ;
- une couche sacrificielle de GaAs ;
- la couche de matériau semiconducteur en alliage Ga/In/P comportant la structure périodique.

12. Dispositif optique selon la revendication 11, **caractérisée en ce que** la couche sacrificielle est localement dégagée sous la couche de matériau semiconducteur comportant la structure périodique.

13. Dispositif optique selon l'une des revendications 1 à 3 et 5 à 12, **caractérisée en ce que** la couche de matériau semiconducteur comporte localement une absence de motifs périodiques de manière à créer un ou des guides d'onde, une ou des cavités.

14. Dispositif optique selon l'une des revendications 1 à 3 et 5 à 13, **caractérisée en ce que** les motifs périodiques sont des trous.

## Patentansprüche

1. Optische Vorrichtung, die als optische Pforte in einem auf eine Referenzwellenlänge λ₀ zentrierten Wellenlängenbereich funktioniert und ab der Einleitung eines ersten optischen Signals ein optisches Ausgangssignal liefert, wobei die optische Vorrichtung eine photonische Kristallstruktur umfasst, die ein Halbleitersubstrat und mindestens eine Halbleitermaterialschicht aufweist, die mindestens lokal eine Gruppe periodischer Motive aufweist, die der photonischen Kristallstruktur entsprechen, die derart angeordnet sind, dass eine optische Resonanzkavität mit einer Wellenlänge im Funktionswellenlängenbereich der Vorrichtung gebildet wird, wobei die Vorrichtung **dadurch gekennzeichnet ist, dass** das Material der Halbleiterschicht eine Legierung aus Gallium, Indium und Phosphor ist, das für Photonen mit einer Wellenlänge im Funktionswellenlängenbereich der Vorrichtung keine 2-Photonen-Absorption aufweist.

2. Optische Vorrichtung nach Anspruch 1, **dadurch gekennzeichnet, dass** sie eine Gruppe optischer Kavitäten aufweist, die erlauben, das optische Ausgangssignal zu verstärken und die Bandbreite zu erweitern.

3. Optische Vorrichtung nach einem der Ansprüche 1 oder 2, **dadurch gekennzeichnet, dass** sie in der Halbleiterschicht eine erste Führung umfasst, wobei die optische Kavität derart an die erste Führung gekoppelt ist, dass das erste optische Signal, das eine Gruppe von Trägerfrequenzen aufweist, auf Ebene der ersten, an die Kavität gekoppelten Führung einleitbar ist und eine derartige Resonanzfrequenz hat, dass die Frequenz erlaubt, aus der Kavität ein optisches Signal in der Frequenz zu extrahieren.

4. Verwendung einer optischen Vorrichtung nach Anspruch 1,die von zwei optischen Signalen adressiert ist, **dadurch gekennzeichnet, dass** das erste optische Signal als Informationsträger in die Führung gemäß einer ersten Ausbreitungsrichtung eingeleitet wird, wobei ein zweites optisches Steuersignal eine Impulsfolge aufweist und in die Führung gemäß einer zweiten Ausbreitungsrichtung entgegengesetzt zu der ersten Richtung derart eingeleitet wird, dass in dem ersten optischen Signal enthaltene Informationen auswählbar sind.

5. Optische Vorrichtung nach Anspruch 1, **dadurch gekennzeichnet, dass** sie eine zweite Führung umfasst, die an die optische Kavität derart gekoppelt ist, dass das erste optische Signal als Informationsträger, die eine Gruppe von Trägerfrequenzen aufweist, in die erste Führung einleitbar ist und dass ein zweites optisches Steuersignal, das eine Impulsfolge aufweist, in die zweite Führung derart einleitbar ist, dass in dem ersten optischen Signal enthaltene Informationen auswählbar sind.

6. Optische Vorrichtung nach Anspruch 5, **dadurch gekennzeichnet, dass** sie einen an die zweite Führung an dem Ende, das dem gegenüberliegt, durch das das Steuersignal eingeleitet wird, gekoppelten Fotodetektor umfasst, um das optische Ausgangssignal zurückzugewinnen.

7. Optische Vorrichtung nach einem der Ansprüche 5 oder 6, **dadurch gekennzeichnet, dass** die erste und zweite Führung Bandfilter-Photonenkristallfilter aufweisen.

8. Optische Vorrichtung nach einem der Ansprüche 5 oder 6, **dadurch gekennzeichnet, dass** sie eine Reihe von Kavitäten oder Gruppen von Kavitäten und eine Reihe zweiter Führungen umfasst, die erlauben, eine Reihe von Steuersignalen zu adressieren.

9. Optische Vorrichtung nach Anspruch 8, **dadurch gekennzeichnet, dass** sie eine Reihe von Fotodetektoren umfasst, die erlauben, aus einem optischen Eingangssignal eine Reihe von Ausgangsignalen zurückzugewinnen.

10. Optische Vorrichtung nach einem der Ansprüche 1 bis 3 und 5 bis 9, **dadurch gekennzeichnet, dass** sie eine Gruppe optischer Kavitäten aufweist, die erlauben, die Interaktion des optischen Ausgangssignals zu verstärken.

11. Optische Vorrichtung nach einem der Ansprüche 1 bis 3 und 5 bis 10, **dadurch gekennzeichnet, dass** sie auf der Oberfläche eines Substrats aus GaAs die Stapelung folgender Schichten umfasst:
- einer GaInP-Schicht,
- einer GaAs-Opferschicht,
- die Halbleiteimaterialschicht als Ga/In/P- Legierung, die die periodische Struktur aufweist.

12. Optische Vorrichtung nach Anspruch 11, **dadurch gekennzeichnet, dass** die Opferschicht lokal unter der Halbleitermaterialschicht, die die periodische Struktur aufweist, freigelegt ist.

13. Optische Vorrichtung nach einem der Ansprüche 1 bis 3 und 5 bis 12, **dadurch gekennzeichnet, dass** die Halbleitermaterialschicht lokal derart eine Abwesenheit von periodischen Motiven aufweist, dass ein Wellenleiter oder Wellenleiter, eine Kavität oder Kavitäten entstehen.

14. Optische Vorrichtung nach einem der Ansprüche 1 bis 3 und 5 bis 13, **dadurch gekennzeichnet, dass** die periodischen Motive Löcher sind.

## Claims

1. An optical device operating as an optical gate within a wavelength range centred on a reference wavelength λ₀ and delivering an optical output signal upon injection of a first optical signal, the optical device comprising a photonic crystal structure having a semiconductor substrate and at least one layer of semiconductor material exhibiting, at least locally, an array of periodic features corresponding to said photonic crystal structure arranged so as to form a resonant optical cavity with a wavelength within the operating wavelength range of said device, said device being **characterised in that** said material of the semiconductor layer is a gallium/indium/phosphorus alloy not exhibiting two-photon absorption for photons having a wavelength within the operating wavelength range of said device.

2. The optical device according to Claim 1, **characterised in that** it comprises an array of optical cavities that make it possible to amplify the optical output signal and to broaden the bandwidth.

3. The optical device according to either of Claims 1 or 2, **characterised in that** it comprises in said semiconductor layer a first guide, said optical cavity coupled to said first guide such that said first optical signal that has a number of carrier frequencies can be introduced at said first guide, coupled to the cavity and having a resonance frequency such that said frequency makes it possible to extract an optical signal at said frequency from said cavity.

4. The use of an optical device according to Claim 1 addressed by two optical signals, **characterised in that** said first information-carrying optical signal is introduced into said guide along a first direction of propagation, a second optical control signal comprising a pulse train and being introduced into said guide along a second direction of propagation opposite said first direction such as to be able to select information contained in said first optical signal.

5. The optical device according to Claim 1, **characterised in that** it comprises a second guide coupled to the optical cavity such that said first optical information-carrying optical signal having a number of carrier frequencies can be introduced into said first guide, and that a second optical control signal comprising a pulse train can be introduced into the second guide such as to be able to select information contained in said first optical signal.

6. The optical device according to Claim 5, **characterised in that** it comprises a photodetector coupled to said second guide at the end opposite the end via which the control signal is introduced so as to recover the optical output signal.

7. The optical device according to either of Claims 5 or 6, **characterised in that** the first and second guides comprise photonic crystal band-pass filters.

8. The optical device according to either of Claims 5 or 6, **characterised in that** it comprises a series of cavities or an array of cavities and a series of second guides making it possible to address a series of control signals.

9. The optical device according to Claim 8, **characterised in that** it comprises a series of photodetectors that make it possible to recover a series of output signals upon injection of an optical input signal.

10. The optical device according to any of Claims 1 to 3 and 5 to 9, **characterised in that** it comprises an array of optical cavities that make it possible to amplify the interaction of the optical output signal.

11. The optical device according to any of Claims 1 to 3 and 5 to 10, **characterised in that** it comprises on the surface of a GaAs substrate a stack of the following layers:
- a layer of GaInP;
- a sacrifical layer of GaAs;
- the layer of Ga/In/P alloy semiconductor material comprising the periodic structure.

12. The optical device according to Claim 11, **characterised in that** the sacrificial layer is locally exposed beneath the layer of semiconductor material comprising the periodic structure.

13. The optical device according to any of Claims 1 to 3 and 5 to 12, **characterised in that** the layer of semiconductor material comprises locally an absence of periodic features so as to create one or more waveguides, one or more cavities.

14. The optical device according to any of Claims 1 to 3 and 5 to 13, **characterised in that** the periodic features are holes.
